# EUROPÄISCHE PATENTANMELDUNG

(11) **EP 1 237 268 A2**
(43) Veröffentlichungstag der Anmeldung: **04.09.2002**
(21) Anmeldenummer: 01130956.4
(22) Anmeldetag: 28.12.2001
(51) Int. Cl.: H02M 3/335

(54) **Spannungskonverter**

(30) Priorität: 01.03.2001 DE 10109768
(71) Anmelder: Power-One AG, 8610 Uster (CH)
(72) Erfinder: Chapuis, Alain, 8610 Uster (CH); Gammenthaler, Peter, 8335 Hittnau (CH)
(74) Vertreter: Behrmann, Niels, Dipl.-Ing.

(57) **Zusammenfassung**

Die Erfindung betrifft einen Spannungskonverter von einem Flusswandlertyp mit einem bezogen auf einen Transformator (17) sekundärseitigen, selbstgesteuerten Synchrongleichrichter, wobei für ein Ansteuern eines aktiven Schaltelements (V₁, V₂) des Synchrongleichrichters eine Kapazitätsvorrichtung (C₁; C₁,C₂) vorgesehen ist, die mittels einer sekundärseitigen Hilfswicklung (W₁, W₂)des Transformators geladen und deren Ladung mittels eines Halbleiterelements (D₁, D₂; 30, 32) an einem Steueranschluss des aktiven Schaltelements anliegt, wobei die Kapazitätsvorrichtung so ausgebildet ist, dass die Ladung einen Synchron-Schaltbetrieb des aktiven Schaltelements ermöglicht.

## Beschreibung

Die vorliegende Erfindung betrifft einen Spannungskonverter vom Flusswandlertyp nach dem Oberbegriff des Patentanspruchs 1.

Derartige Spannungskonverter weisen sekundärseitig einen Synchrongleichrichter auf, welcher zum Erreichen eines möglichst günstigen Wirkungsgrades typischerweise mit MOSFETs realisiert wird. Aus dem Stand der Technik sind zahlreiche Topologien für Flusswandler bekannt, wie etwa Eintakt-, Gegentakt-, Halbbrücken-, Push-Pull-, Vollbrücken- oder Phase-Shift-Flusswandler.

Insbesondere jedoch das Prinzip der Selbststeuerung von Synchron-Gleichrichtern, nämlich die Verwendung von in der Konverterschaltung selbst bereits vorhandenen bzw. auftretenden Spannungsverläufen zum Ein- bzw. Ausschalten der aktiven Schaltelemente synchron zu primärseitigen Schaltern, kann bei manchen Flusswandler-Topologien, insbesondere solchen, die keine Eintakt-Flusswandler sind, prinzipiell problematisch sein: Wenn bei einem Gegentakt-, Halbbrücken-, Vollbrücken- oder Phase-Shift-Flusswandler primärseitig alle Halbleiter im ausgeschalteten Zustand sind, muss auf der Sekundärseite zu diesem Zeitpunkt der Freilaufstrom durch die aktiven (Gleichrichter-)Schaltelemente geleitet werden, und bei einer Realisierung dieser Elemente durch MOSFETs muss ein entsprechendes Ansteuersignal vorhanden sein. Dieses kann jedoch unmittelbar aus dem Transformator, etwa mittels einer für das Ansteuersignal vorgesehenen Hilfswicklung, nicht ohne weiteres erzeugt werden.

Aus diesem Grunde ist zwar prinzipiell das Prinzip der Selbststeuerung bekannt, es ist jedoch auf Grund dieser und anderer topologiebedingter Probleme gerade bei Flusswandlern der genannten Topologien nachteilig.

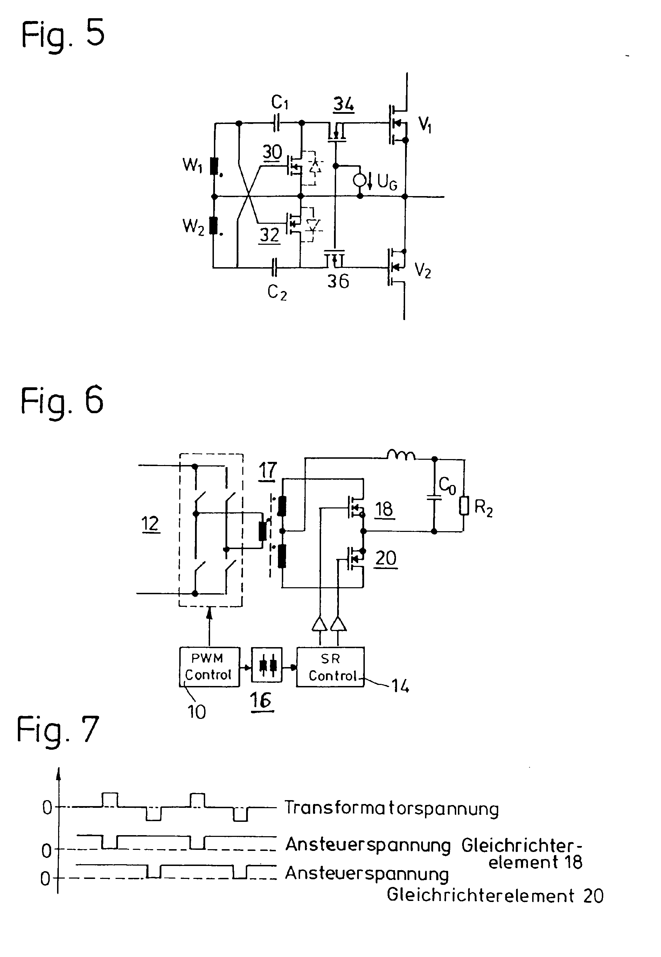

Vielmehr wird bei diesen Flusswandlertopologien (Gegentakt-, Halbbrücken-, Vollbrücken- oder Phase-Shift-Flusswandlern) oder anderen Topologien eine Ansteuerung von Leistungshalbleitern eines sekundärseitigen Synchrongleichrichters, wie in analoger Weise etwa in dem deutschen Gebrauchsmuster 299 01 322 beschrieben, mittels einer Fremdsteuerung gelöst, wie sie zum Stand der Technik in Fig. 6 schematisch beschrieben ist: Eine PWM-Steuereinheit 10 steuert dabei sowohl eine primärseitige (ansonsten bekannte) Schalteranordnung selbst, als auch über eine sekundärseitig von einem Übertrager 16 angeordneten Steuereinheit 14, ein Paar als Synchrongleichrichter wirkender Leistungshalbleiter 18, 20, wobei das Konverter-Ausgangsspannungssignal über einem Lastwiderstand R_{L} abfällt.

Die Spannungskurven der Fig. 7 verdeutlichen das Schaltverhalten der Gleichrichterelemente 18 und 20 relativ zur Transformatorspannung (erste Kurve), die, bedingt durch die primärseitige Steuerung, in der gezeigten Weise um die Nullspannung pendelt: Dagegen besitzen die Ansteuersignale für die Transistoren 18, 20 (zweite und dritte Kurve) einen Pegel größer Null zum Aktivieren des jeweiligen Halbleiters für den Freilaufstrom.

Allerdings ist, wie schon anhand der Fig. 6 deutlich wird, eine derartige Fremdsteuerung der aktiven Schaltelemente des Synchrongleichrichters auf Sekundärseite aufwendig und teuer.

Aufgabe der vorliegenden Erfindung ist es daher, eine Ansteuerung von aktiven Schaltelementen eines Synchrongleichrichters in einem gattungsgemäßen Spannungskonverter der genannten Topologien zu vereinfachen, insbesondere den schaltungstechnischen Aufwand zu verringern, wobei das Prinzip der Selbststeuerung, d. h. Regenerierung der Steuersignale aus bereits in der Konverterschaltung vorhandenen Signalen, ohne die Notwendigkeit externer Signallogiken, eingesetzt werden soll.

Die Aufgabe wird durch die Vorrichtung mit den Merkmalen des Patentanspruchs 1 gelöst; vorteilhafte Weiterbildungen der Erfindungen sind in den Unteransprüchen beschrieben.

So ist erfindungsgemäß eine Kapazitätsvorrichtung vorgesehen, welche mit ihrer Ladung die Ansteuerenergie (bzw. Ansteuerspannung) für die aktiven Schaltelemente so zwischenspeichert, dass insbesondere auch zu denjenigen Zeitpunkten im Betriebszyklus, zu welchem sekundärseitig an der erfindungsgemäßen Hilfswicklung kein Spannungssignal anliegt, der Ansteuerungsbetrieb und mithin die ordnungsgemäße Funktionsweise des Synchrongleichrichters gewährleistet sein kann.

In erfindungsgemäß vorteilhafter Weise wird dabei ausgenutzt, dass das von der Hilfswicklung erzeugte Signal synchron zur Transformatorspannung ist, so dass das Ein- bzw. Ausschalten der aktiven Schaltelemente des Gleichrichters mit hoher Genauigkeit und damit verlustarm erfolgt. Das erfindungsgemäß zur Ansteuerung des Synchrongleichrichters (genauer gesagt: des Steueranschlusses eines betreffenden Gleichrichter-Schaltelements) eingesetzte Halbleiterelement, Diode oder Transistor, ermöglicht dabei in schaltungstechnisch äußerst einfacher Weise die Signalerzeugung und Signalanlegung durch Zusammenwirken von Hilfswicklung und Kapazität.

Besonders bevorzugt ist es dabei, einen Kapazitätswert für die Kapazitätsvorrichtung zu wählen, der deutlich höher ist als eine Ansteuerkapazität (z. B. Gatekapazität im Falle eines MOSFET) des Steueranschlusses, so dass die betreffenden Ladungsverhältnisse ein sicheres Ansteuern und stabiles Schalten gewährleisten. Dabei hat sich besonders bewährt, für die Kapazität der Kapazitätsvorrichtung mindestens das fünf- bis zehnfache der für das aktive Schaltelement vorhandenen Ansteuerkapazität zu wählen.

Prinzipiell eignet sich die vorliegende Erfindung für beliebige Topologien auf Primärseite und Sekundärseite; als besonders bevorzugt wären primärseitig Gegentakt-, Vollbrücken-, Halbbrücken- oder Phase-Shift-Topologien, und sekundärseitig Current-Doubler- oder die einfache Mittelpunktkonfiguration mit Speicherdrossel anzusehen.

In einer besonders bevorzugten Ausführungsform der Erfindung ist die Sekundärseite mit zwei Schaltungszweigen als Brückengleichrichter realisiert, so dass für jeden Schaltungszweig ein aktives Schaltelement vorliegt, welches aus einer zugehörigen Hilfswicklung des Paares von Hilfswicklungen mit Ladung bzw. Spannung versorgt wird. Dabei kann es einerseits günstig sein, für beide Zweige einen gemeinsamen Kondensator als Kapazitätsvorrichtung vorzusehen; alternativ sieht eine weitere, bevorzugte Ausführungsform der Erfindung vor, für jeden Zweig eine Reihenschaltung aus Induktivität (d. h. jeweiliger Hilfswicklung) und Kondensator vorzusehen, wobei in diesem Fall das Halbleiterelement als Transistor (besonders bevorzugt: MOSFET) realisiert ist und sein Steuersignal von einem Knoten zwischen Induktivität und Kondensator eines jeweils gegenüberliegenden Zweiges empfängt.

Der Vorteil gegenüber einer Ausführungsform mit Dioden als Halbleiterelement bzw. lediglich einem Kondensator liegt darin, dass durch eine solche Schaltung der Kondensator durch die zugehörige Hilfswicklung sowohl aufgeladen, als auch entladen werden und die Steueranschlüsse der aktiven Schaltelemente während der vorgesehenen Ausschaltphasen aktiv auf einen Nullpegel gezogen werden, so dass insbesondere bei schnellen Spannungsänderungen kapazitive Effekte der Leistungshalbleiter selbst nicht zu einem unbeabsichtigten Einschalten führen können.

Eine weitere bevorzugte Ausführungsform der Erfindung liegt darin, die Zweige jeweils mit einem Spannungsbegrenzer zu kombinieren, da die Spannung über einem in jedem Zweig verwendeten Kondensator als Kapazitätselement von der Eingangsspannung des Konverters abhängt und daher, etwa bei großen Eingangsspannungsvariationen, eine maximale Ansteuerspannung am aktiven Schaltelement überschritten werden kann. Zu diesem Zweck bietet es sich besonders an, geeignet angeordnete und angesteuerte MOSFETs kanalseitig zur Spannungsbegrenzung den jeweiligen Steueranschlüssen der aktiven Schaltelemente vorzuschalten.

Im Ergebnis entsteht durch die vorliegende Erfindung in schaltungstechnisch überraschend einfacher Weise ein Spannungskonverter mit selbstgesteuertem Synchrongleichrichter, der sich durch präzises Schaltverhalten der sekundärseitigen Gleichrichterelemente und damit hohe Verlustarmut auszeichnet. Gleichzeitig minimiert die geringe Anzahl der verwendeten Schaltungselemente den herstellungstechnischen Aufwand, so dass insbesondere auch aus fertigungstechnischer Sicht die vorliegende Erfindung große Vorteile aufweist.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1:: ein prinzipielles Schaltbild zur Verdeutlichung der Erzeugung eines Ansteuersignals für ein aktives Gleichrichterschaltelement mittels Hilfswicklung und Kondensator;
- Fig. 2:: ein Signaldiagramm zum Vergleich der Spannung über der Hilfswicklung und der Ansteuerspannung;
- Fig. 3:: ein Prinzipschaltbild einer ersten Ausführungsform der vorliegenden Erfindung mit zwei sekundärseitigen aktiven Schaltelementen und jeweils zugeordneter Hilfswicklung bei gemeinsamem Kondensator;
- Fig. 4:: eine Weiterentwicklung des Prinzips der Fig. 3 (lediglich Ausschnitt der Ansteuerung der Leistungshalbleiter) mittels Transistoren als Schaltelementen und für jeden Zweig separatem Kondensator;
- Fig. 5:: noch eine Weiterentwicklung des Schaltbildes gem. Fig. 4 mit zusätzlich vorgesehenen, als Spannungsbegrenzer geschalteten Transistoren vor den jeweiligen Steueranschlüssen der aktiven Schaltelemente (best mode);
- Fig. 6:: ein Prinzipschaltbild eines aus dem Stand der Technik bekannten, fremdgesteuerten Spannungskonverters vom Flusswandlertyp und
- Fig. 7:: ein Signaldiagramm zum Vergleich der verschiedenen, durch zusätzliche Schaltlogik erzeugten Ansteuersignale für die sekundärseitigen aktiven Gleichrichter-Schaltelemente in Fig. 7.

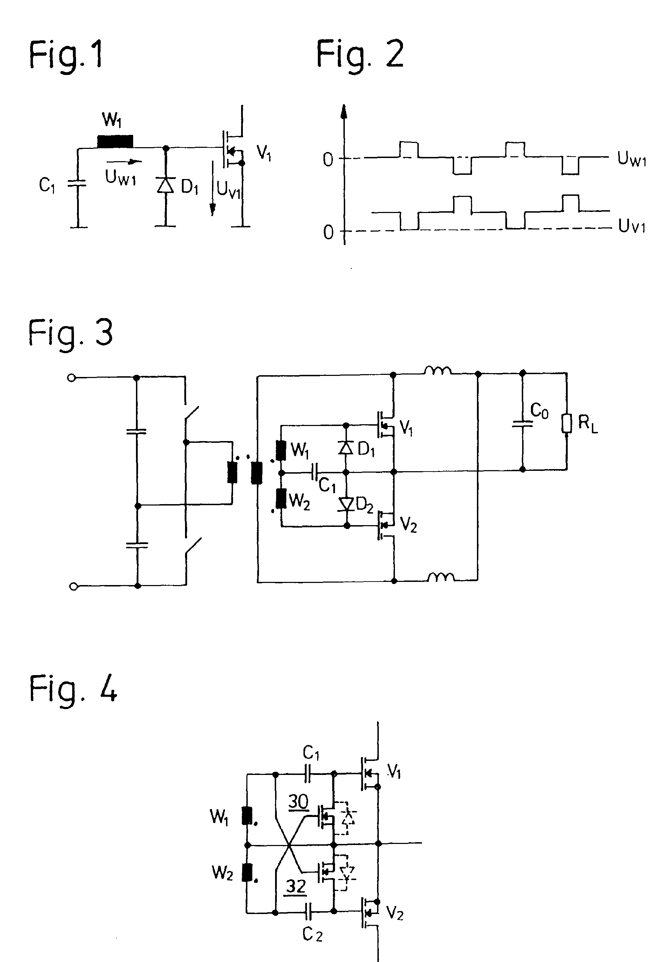

Fig. 1 und Fig. 2 verdeutlichen, wie mit Hilfe eines Kondensators C₁ als Kapazitätsvorrichtung sowie einer Diode D₁ als Halbleiterelement ein vom Transformator mittels einer Hilfswicklung W₁ erzeugtes Transformatorspannungssignal U_{W1} in der Art eines Spannungsverdopplers zum Erzeugen einer Ansteuerspannung U_{V1} für das Leistungshalbleiterbauelement V₁ so angehoben werden kann, dass, von einem hohen (d. h. Einschalt-)Pegel synchron und in ansonsten bekannter Weise das Leistungshalbleiterelement im Gleichrichterbetrieb periodisch ausgeschaltet wird. Die durch die Spannungsverdopplung im Signal U_{V1} erzeugten Signalspitzen sind für einen Betrieb des Leistungshalbleiters V₁ unschädlich. Die Hilfswicklung ist in ansonsten bekannter Weise auf dem (nicht näher erläuterten) Haupttransformator angebracht und weist eine enge Kopplung mit dessen Leistungswicklungen auf.

In der konkreten schaltungstechnischen Realisierung zeigt die Fig. 3 die Funktionsweise einer Selbststeuerung eines sekundärseitigen Synchrongleichrichters mit Hilfe einer Kapazität: Ein Paar von Hilfswicklungen W₁, W₂ für einen jeweiligen Leistungshalbleiter V₁ bzw. V₂ erzeugt in ansonsten bekannter Weise ein gegenphasiges Spannungssignal. Durch Wirkung zugeordneter Dioden D₁ bzw. D₂ sowie des gemeinsamen, zwischen dem Verbindungspunkt der Dioden und der Hilfswicklungen verbundenen Kondensators C₁ wird in der in Fig. 2, untere Kurve gezeigten Weise das Ansteuersignal für die Leistungshalbleiter V₁, V₂ jeweils so angehoben, dass ein zum gewünschten Ansteuern der Halbleiter ausreichender Ladungs- und damit Spannungspegel zur Verfügung steht. Angenommen wird dabei, dass der Kondensator C₁ so dimensioniert ist, dass er eine (parasitäre) Gate-Kapazität der MOSFETs V₁ bzw. V₂ um ein Mehrfaches übersteigt, so dass durch das Ansteuern der Halbleiter die über C₁ abfallende Spannung lediglich unwesentlich absinkt.

Im Ergebnis entsteht durch dieses Verhalten ein nahezu idealer Spannungsverlauf für die Ansteuerung der aktiven Gleichrichter, da die Ansteuerspannung, wie in Figur 7 gezeigt, nicht nur über die Einschaltphase konstant ist, sondern während der Phase, in der das gegenphasige aktive Gleichrichter-Element ausgeschaltet ist, die Ansteuerspannung noch erhöht wird. Dies ist von Vorteil, da in dieser Phase der gesamte Laststrom durch das eine aktive Gleichrichter-Element fließt und durch eine erhöhte Ansteuerspannung dessen Durchlasswiderstand (und damit dessen Verlustleistung) noch weiter reduziert wird.

Praktisch ist zudem das Vorsehen von Hilfswicklungen kein wesentlicher Nachteil, da angesichts der zu erzeugenden geringen Ausgangsspannungen (typischerweise <3,3V) eine direkte Ansteuerung der aktiven Gleichrichterelemente ohnehin nicht möglich wäre.

Während die Schaltungsanordnung der Fig. 3 primärseitig eine sog. Halbbrücken-Konfiguration und sekundärseitig eine sog. Current-Doubler-Konfiguration zeigt, handelt es sich hierbei lediglich um geeignete Ausführungsbeispiele. In der praktischen Realisierung eignen sich jedoch zahlreiche primär- und sekundärseitige Topologien, so etwa primärseitig Gegentakt-, Halbbrücken-, Vollbrücken oder Phase-Shift-Konfigurationen und auf der Sekundärseite Current Doubler oder die einfache Mittelpunkt-Konfiguration mit einer Speicherdrossel.

Anhand der Fig. 4 und 5 wird eine Weiterentwicklung der prinzipiellen Idee der Fig. 1 bis 3 erläutert, wobei durch den Einsatz von (MOSFET-) Transistoren anstelle der Dioden prinzipbedingte Nachteile der Fig. 3 verbessert werden können. Die wesentlichen Nachteile sind oben bereits dargelegt: Problematisch ist, dass die Kondensator-Spannung ein Abbild der Eingangsspannung ist, und wenn diese variiert, dann ändert sich auch die Kondensatorspannung mit. Da der Kapazitätswert C₁ jedoch relativ groß gewählt werden muss, kann die Anpassung der Kondensatorspannung recht lange dauern. Insbesondere ist bei der Diodenschaltung prinzipiell nur ein schnelles Aufladen möglich, das notwendige Entladen der Kapazität bei einem großen (negativen) Eingangsspannungssprung kann nicht durch die Diode erfolgen und müsste demnach über einen Widerstand erfolgen, was aber zu einer permanenten Verlustleistung führen würde. Daher ist die Lösung mit (MOSFET-) Transistoren gem. Fig. 4, Fig. 5 von Vorteil, weil die Transistoren 30, 32 in Fig. 4, Fig. 5 (insbesondere MOSFETs) prinzipiell in beide "Strom-Richtungen" niederohmig angesteuert werden und deshalb den Kondensator schnell auf- und auch entladen können; somit folgt die Spannung auf diesem Kondensator immer der Eingangsspannung, unabhängig davon, wie sich diese ändert. (Wenn das nicht der Fall ist, besteht die Gefahr, dass der Synchrongleichrichter bei einem negativen Eingangsspannungssprung nicht mehr richtig ausgeschaltet wird.)

So ist in Fig. 4 (und auch in der weiteren Weiterentwicklung der Fig. 5) die Reihenfolge von Kapazität und Induktivität (Hilfswicklung) vertauscht, mit dem Ergebnis, dass jeder Zweig der in Fig. 4 gezeigten ausschnittsweisen Schaltung einen eigenen Kondensator C₁ bzw. C₂ aufweist. Zusätzlich wird eine jeweilige Diode durch einen MOSFET 30, 32 ersetzt, dergestalt, dass anstelle der Diode der Fig. 3 der betreffende Kanal des MOSFET verläuft, und die (Gate)Ansteuerung eines betreffenden MOSFET durch das Signal am jeweils gegenüberliegenden Zweig abgegriffen wird, d. h. der MOSFET 32 wird durch das Signal am Knoten zwischen W₁ und C₁ abgegriffen, während das Steuersignal für MOSFET 30 am Knoten zwischen W₂ und C₂ abgegriffen wird.

Hierdurch wird erreicht, dass ein betreffender Kondensator von einer zugehörigen Hilfswicklung nunmehr sowohl aufgeladen als auch entladen werden kann. Zusätzlich sorgt etwa der MOSFET 30 dafür, dass in einem Ausschaltzustand des Leistungshalbleiters V₁ dessen Gate-Elektrode niederohmig auf Nullpotential gezogen wird (und entsprechend gilt dies für MOSFET 32, bzw. V₂), mit der Wirkung, dass, insbesondere auch bei schnellen Spannungsänderungen an der Drain-Elektrode der aktiven Gleichrichterelemente V₁, V₂, sich diese durch parasitäre (Rückkopplungs-)Kapazitäten zwischen Drain und Gate nicht selbst wieder einschalten können.

Eine weitere Ergänzung erfährt die in Fig. 4 gezeigte Ausführungsform dadurch, dass in den Zweig zwischen Kondensator und jeweiliger Steuerelektrode des Leistungshalbleiterelments noch ein Halbleiter 34 bzw. 36, bevorzugt MOSFET, zur Spannungsbegrenzung geschaltet ist, welcher, in der Fig. 5 symbolisch gezeigt, mit einer gewählten Spannung U_{G} voreingestellt wird und damit eine maximale Ansteuerspannung für V₁ bzw. V₂ festlegt bzw. begrenzt.

## Patentansprüche

1. Spannungskonverter von einem Flusswandlertyp mit einem bezogen auf einen Transformator (17) sekundärseitigen, selbstgesteuerten Synchrongleichrichter,
**dadurch gekennzeichnet, dass**
für ein Ansteuern eines aktiven Schaltelements (V₁, V₂) des Synchrongleichrichters eine Kapazitätsvorrichtung (C₁; C₁,C₂) vorgesehen ist,
die mittels einer sekundärseitigen Hilfswicklung (W₁, W₂) des Transformators geladen und deren Ladung mittels eines Halbleiterelements (D₁, D₂; 30, 32) an einem Steueranschluss des aktiven Schaltelements anliegt,
wobei die Kapazitätsvorrichtung so ausgebildet ist, dass die Ladung einen Synchron-Schaltbetrieb des aktiven Schaltelements ermöglicht.

2. Spannungskonverter nach Anspruch 1, **dadurch gekennzeichnet, dass** eine Kapazität der Kapazitätsvorrichtung ein Mehrfaches einer wirksamen Kapazität des Steueranschlusses, insbesondere das 5- bis 10-fache, beträgt.

3. Spannungskonverter nach Anspruch 1 oder 2, **dadurch gekennzeichnet, dass** der Spannungskonverter primärseitig eine Gegentakt-, Halbbrücken-, Vollbrückenoder Phase-Shift-Konfiguration und auf der Sekundärseite eine Current Doubler oder eine Mittelpunkt-Konfiguration aufweist.

4. Spannungskonverter nach einem der Ansprüche 1 bis 3,
**dadurch gekennzeichnet, dass** für ein zwei Gleichrichterzweige realisierendes Paar von aktiven Schaltelementen (V₁, V₂) des Synchrongleichrichters ein entsprechendes Paar von Hilfswicklungen (W₁, W₂) des Transformators mit jeweils einem zugeordneten Halbleiterelement (D₁, D₂) vorgesehen ist, die mit einem gemeinsamen Kondensator als Kapazitätsvorrichtung (C₁) verbunden sind.

5. Spannungskonverter nach einem der Ansprüche 1 bis 4,
**dadurch gekennzeichnet, dass** das Halbleiterelement als Transistor, insbesondere MOSFET (30, 32), ausgebildet ist.

6. Spannungskonverter nach einem der Ansprüche 1 bis 3,
**dadurch gekennzeichnet, dass** für ein zwei Gleichrichterzweige realisierendes Paar von aktiven Schaltelementen (V₁, V₂) des Synchrongleichrichters jeweils eine zugehörige Hilfswicklung (W₁, W₂) des Transformators sowie jeweils ein Transistor (30, 32) als Halbleiterelement vorgesehen ist,
wobei die Kapazitätsvorrichtung jeweils einen Kondensator (C₁, C₂) zwischen dem Steueranschluss eines betreffenden des Paares von aktiven Schaltelementen und der zugehörigen Hilfswicklung in Reihe geschaltet aufweist
und ein Steueranschluss eines jeweiligen der Transistoren mit einem Verbindungsknoten zwischen Hilfswicklung und Kondensator eines gegenüberliegenden Gleichrichterzweiges verbunden ist.

7. Spannungskonverter nach Anspruch 6, **gekennzeichnet durch** Mittel (34, 36) zur Spannungsbegrenzung, die zwischen dem Kondensator und dem Steueranschluss eines zugehörigen des Paares von aktiven Schaltelementen geschaltet sind.

8. Spannungskonverter nach Anspruch 7, **dadurch gekennzeichnet, dass** die Mittel zur Spannungsbegrenzung als Kanal eines mit einer Vorspannung (U_{G}) angesteuerten Transistors, insbesondere MOSFET, realisiert sind.
